# EUROPÄISCHE PATENTSCHRIFT

(11) **EP 3 424 065 B1**
(45) Veröffentlichungstag und Bekanntmachung des Hinweises auf die Patenterteilung: **07.12.2022**
(21) Anmeldenummer: 17706456.5
(22) Anmeldetag: 21.02.2017
(51) Int. Cl.: H01H 9/02, H04M 1/18, G06F 1/16, H04B 1/3888

(54) **SCHUTZ-/BEDIENUNGSAUFNAHME**
PROTECTIVE/CONTROL RECEPTACLE
LOGEMENT DE PROTECTION/COMMANDE

(30) Priorität: 02.03.2016 DE 202016101134 U
(43) Veröffentlichungstag der Anmeldung: 09.01.2019
(73) Patentinhaber: Haug, Thomas, 75217 Birkenfeld (DE)
(72) Erfinder: Haug, Thomas, 75217 Birkenfeld (DE)
(74) Vertreter: Wacker, Jost Oliver
(86) Internationale Anmeldenummer: PCT/EP2017/053881
(87) Internationale Veröffentlichungsnummer: WO 2017/148740

(56) Entgegenhaltungen:
- WO-A1-92/07372
- US-A- 5 092 459
- US-A1- 2003 184 958
- US-A1- 2010 315 348
- US-A1- 2011 260 980
- US-A1- 2014 066 144

## Beschreibung

Die Erfindung betrifft eine Fernsteuerungsanordnung mit einer Schutz-/Bedienungsaufnahme für ein als Fernsteuerung verwendbares Mobilfunkgerät, wie beispielsweise eine Funkfernsteuerung oder ein Computergerät mit Transceiver und Antenne zur Steuerung von Hubgeräten in Industrieanlagen oder auf Baustellen, nach dem Oberbegriff des Anspruchs 1. Diese Schutz-/Bedienungsaufnahme weist eine Umhüllung auf, die eine Aufnahme für das jeweilige Mobilfunkgerät begrenzt. Dabei sind an der Umhüllung aufnahmeseitige Bedienmittel zur Ansteuerung von mechanischen und/oder virtuellen geräteseitigen Bedienmitteln des Mobilfunkgeräts vorgesehen. Diese geräteseitigen Bedienmittel können dabei beispielsweise durch wenigstens eine physische Taste und/oder durch auf einem Touchscreen oder Touchpad erzeugte Bedienfelder gebildet sein. Die aufnahmeseitigen Bedienmittel sind dabei derart ausgebildet, dass sie von einer Außenseite der Umhüllung beaufschlagt beziehungsweise betätigt werden können. Dabei weist die Schutz-/Bedienungsaufnahme an der Umhüllung einen Eckenschutz für die Aufnahme von Geräteecken des Mobilfunkgeräts auf. Durch einen derartigen Eckenschutz schützt die Schutz-/Bedienungsaufnahme das darin aufgenommene Mobilfunkgerät besonders wirksam beim Herabfallen, Verkanten oder auch bei Druck- oder Stoßeinwirkungen auf die Ecken des Mobilfunkgerätes. Hierdurch ermöglicht die erfindungsgemäße Schutz-/Bedienungsaufnahme einen besonders vielseitigen Einsatz des Mobilfunkgeräts, wie insbesondere auf Baustellen oder in Industrieanlagen. Dabei können in dem Eckenschutz alle Geräteecken des Mobilfunkgeräts aufgenommen werden. Dies hat den Vorteil, dass das Mobilfunkgerät zu allen Seiten geschützt ist und somit beim Herabfallen aus einer gewissen Höhe unabhängig von der Ausrichtung beim Aufprall vor größeren Beschädigungen geschützt werden kann. _Ferner sind die aufnahmeseitigen Bedienmittel gegenüber benachbarten Bereichen der Außenseite derart unterschiedlich ausgeführt, dass sie haptisch wahrgenommen beziehungsweise ertastet werden können. Hierbei dienen die aufnahmeseitigen Bedienmittel wenigstens teilweise zur Ansteuerung virtueller geräteseitiger Bedienmittel, die wenigstens ein an einem Touchscreen des Mobilfunkgerätes erzeugtes virtuelles Bedienfeld umfassen.

US 2014/0066144 A1 zeigt ein wasserdichtes Gehäuse zur Aufnahme eines Mobiltelefons, bei dem eine Seitenwand verschwenkbar gelagert ist, um das Gehäuse öffnen und schließen zu können. In einen Rahmen des Gehäuses sind Knöpfe aus einem flexiblen Material vorgesehen, mittels denen die korrespondierenden Knöpfe des aufgenommenen Mobiltelefons betätigt werden können.

WO 92/07372 beschreibt eine Schutzaufnahme für Fernbedienungen. Die Schutzvorrichtung weist eine Vielzahl von noppenförmigen Sckockabsorbern und elastisch dehnbaren Bereichen auf, durch die die Schutzaufnahme auf unterschiedlich große Geräte aufgezogen werden kann.

US 2003/0184958 A1 zeigt eine kofferartige Aufnahme für einen Tablet-PC, die eine Ausnehmung aufweist, über die der Tablet-PC auch im aufgenommenen Zustand betätigt werden kann. Dabei kann an der Ausnehmung ein transparentes Material vorgesehen sein, über das das Display des Tablet-PCs bedient werden kann.

US 5,092,459 beschreibt eine transparente Schutzaufnahme für Fernbedienungen mit Druckknöpfen. Die Schutzaufnahme kann dabei durch einen Klett/Flausch-Verschluss geöffnet und geschlossen werden und weist flexible Erhebungen auf, über die die Druckknöpfe betätigt werden können.

Aus der US 2012/0050165 A1 ist eine Schutz-/Bedienungsaufnahme für ein mobiles elektronisches Gerät mit einem Touchscreen bekannt. Diese dient zur nachträglichen Anbringung einer Tastatur am Touchscreen. Die Schutz-/Bedienungsaufnahme formt hierbei eine schlaufenförmige Hülle aus, die auf das elektronische Gerät aufgeschoben wird.

US2010/0315349A1 beschreibt eine Computervorrichtung mit einem Touchscreen an dem mehrere virtuelle Eingabebereiche in Form einer Tastatur erzeugt werden. Um die Präzision bei der Betätigung der einzelnen virtuellen Eingabefelder zu erhöhen, ist eine an den Touchscreen anlegbare oder ansteckbare Eingabeverbesserungsoberfläche vorgesehen. In diese sind ertastbare Eingabebereiche eingearbeitet, über die die virtuellen Eingabebereiche des Touchscreens betätigt werden können.

Nachteilig an der bekannten Hülle ist, dass diese nur eine sehr beschränkte Schutzfunktion für das betreffende Mobilfunkgerät bietet. Insbesondere bei Anwendungen auf Baustellen oder in Industrieanlagen, wo es häufig zu mechanischen Beaufschlagungen durch Verkantung oder Herunterfallen des Mobilfunkgeräts oder zu äußeren Einwirkungen durch Flüssigkeiten oder Feststoffe kommen kann, besteht demgegenüber der Bedarf, auch bei einer derartigen Verwendung des in der Schutz-/Bedienungsaufnahme aufgenommenen Mobilfunkgerätes einen ausreichenden Schutz sicherzustellen.

US2011/0260980A1 beschreibt eine Aufnahme für ein Mobiltelefon mit Touchscreen, die durch einen transparenten Klappdeckel zu allen Seiten verschließbar ist. In den Klappdeckel sind dabei haptisch erkennbare Konturen in Form von Erhöhungen oder Vertiefungen integriert, über die die darunter angeordneten virtuellen Bedienfelder des Touchscreens betätigt werden können. Im geschlossenen Zustand kann das Mobiltelefon dadurch in der Art eines mit physischer Tastatur ausgestatteten Mobiltelefons verwendet werden, während es im aufgeklappten Zustand in der Art eines ausschließlich mit Touchscreen ausgestatteten Mobiltelefons bedient wird.

Die Aufgabe der Erfindung ist es daher, die genannten Nachteile zu vermeiden und eine Fernsteuerungsanordnung zur Verfügung zu stellen, die eine präzise Wahrnehmung der aufnahmeseitigen Bedienmittel und dadurch eine exakte Bedienung des als Fernsteuerung verwendeten Mobilfunkgerätes ermöglicht.

Diese Aufgabe wird durch eine Fernsteuerungsanordnung mit den Merkmalen des Anspruchs 1 gelöst. Dabei weist das Mobilfunkgerät eine Sensorik zur Detektion einer Beaufschlagungsintensität der Bedienmittel und eine geräteseitige Elektronik auf, die in Abhängigkeit der detektierten Beaufschlagungsintensität eine vorbestimmte, haptisch wahrnehmbare Rückmeldung generiert. Hierdurch ermöglicht die Schutz-/Bedienungsaufnahme der Fernsteuerungsanordnung eine exakte Bedienung eines darin aufgenommenen Mobilfunkgerätes über die präzise wahrnehmbaren aufnahmeseitigen Bedienmittel.

Ferner ist es günstig, wenn die aufnahmeseitigen Bedienmittel wenigstens eine in die Umhüllung eingelassene Materialausnehmung aufweisen. Hierdurch kann die Materialausnehmung beispielsweise so tief in die Umhüllung eingelassen sein, dass diese zwar geschlossen bleibt, aber eine Spannungsänderung an einem in der Geräteaufnahme angeordneten Touchscreen durch Positionierung eines Fingers an der Materialausnehmung ermöglicht.

Alternativ oder zusätzlich hierzu ist es günstig, wenn die aufnahmeseitigen Bedienmittel wenigstens ein sich von einer Außenseite der Umhüllung weg erstreckendes Bedienelement aufweisen. Dies ermöglicht eine Beaufschlagung des virtuellen oder mechanischen geräteseitigen Bedienelements durch Betätigung des außenseitigen Bedienelementes, wodurch wiederum eine gute haptische Wahrnehmbarkeit der aufnahmeseitigen Bedienmittel und eine komfortable Betätigung derselben möglich ist.

Vorteilhafterweise bildet das wenigstens eine aufnahmeseitige Bedienelement hierbei einen Steuerhebel oder Joystick. Dies ermöglicht eine besonders komfortable und exakte Steuerung des Mobilfunkgeräts, wie beispielsweise auch beim Tragen von Arbeitshandschuhen. Alternativ oder zusätzlich hierzu ist es von Vorteil, wenn das wenigstens eine aufnahmeseitige Bedienelement einen Regler bildet, wodurch besonders differenzierte Steuerungssignale erzeugt werden können, wie beispielsweise hinsichtlich einer Geschwindigkeit oder einer Beaufschlagungskraft eines angesteuerten Gerätes. Alternativ oder zusätzlich hierzu ist es günstig, wenn das aufnahmeseitige Bedienelement einen Drehschalter bildet, wodurch an dem Mobilfunkgerät in einfacher Weise ein Steuerungselement zur Verfügung gestellt werden kann, das insbesondere gemäß einem Drehpotentiometer eingestellt werden kann. Alternativ oder zusätzlich hierzu ist es ferner vorteilhaft, wenn das wenigstens eine aufnahmeseitige Bedienelement durch einen insbesondere blasenförmigen kollabierbaren Knopf gebildet ist. Dieser kann dabei derart ausgebildet sein, dass über diesen lediglich in einer eingedrückten beziehungsweise kollabierten Stellung eine Spannungsänderung an den geräteseitigen Bedienmitteln erzeugt werden kann, die geeignet ist, um eine Steuerungssignal zu generieren. Dies ermöglicht eine einfache und komfortable Beaufschlagung beispielsweise von kapazitiven Touchscreens.

In einer weiteren vorteilhaften Ausführungsform ist für die Betätigung des aufnahmeseitigen Bedienelementes eine separate Handhabe vorgesehen, was eine an die jeweiligen Arbeitsbedingungen angepasste vereinfachte Betätigung der Bedienelemente ermöglicht. Dabei ist es von Vorteil, wenn die Handhabe durch einen separaten Stift gebildet ist. Mittels eines Stiftes kann die Beaufschlagung des Mobilfunkgeräts auch bei Verwendung von Arbeitshandschuhen sehr genau erfolgen.

Ferner ist es von Vorteil, wenn das aufnahmeseitige Bedienelement eine elastische Beaufschlagungskontur zur Kontaktierung der geräteseitigen Bedienungsmittel aufweist. Dies hat den Vorteil, dass das aufnahmeseitige Bedienelement in Abhängigkeit von einer jeweiligen Beaufschlagungskraft eine unterschiedliche Verformung erfährt. Auf diese Weise können in Abhängigkeit von der jeweiligen Beaufschlagungskraft unterschiedliche Steuerungssignale erzeugt werden. Dabei ist es vorteilhaft, wenn die elastische Beaufschlagungskontur ballig ausgeführt ist. Hierdurch bildet diese in Abhängigkeit der Beaufschlagungskraft eine unterschiedlich große Kontaktfläche aus, die somit beispielsweise wiederum eine unterschiedliche Anzahl von durch die geräteseitigen Bedienungsmittel definierten Detektionsfelder kontaktiert.

Ferner ist es vorteilhaft, wenn das aufnahmeseitige Bedienelement wenigstens bereichsweise elektrisch leitfähig ist. Beispielsweise ist hierbei in einem Kontaktbereich der aufnahmeseitigen Bedienmittel ein leitfähiger Körper für die Verstärkung eines Kontaktes mit den geräteseitigen Bedienmitteln vorgesehen. Hierdurch können die für die Erzeugung von Steuerungssignalen an kapazitiven Touchscreens benötigten Spannungsänderungen bei Betätigung des aufnahmeseitigen Bedienelementes sicher generiert werden. Dabei ist es günstig, wenn die aufnahmeseitigen Bedienmittel wenigstens bereichsweise aus einem leitfähigen Material gebildet sind, wodurch die bereichsweise elektrische Leitfähigkeit besonders einfach hergestellt werden kann. Zusätzlich oder alternativ hierzu ist es von Vorteil, wenn das aufnahmeseitige Bedienelement leitfähige Materialeinschlüsse aufweist. Hierdurch kann auch an einem für die aufnahmeseitigen Bedienmittel bevorzugten, wenig leitfähigen Material, wie beispielsweise einem elastischen Kunststoff, eine ausreichende elektrische Leitfähigkeit hergestellt werden. Dabei ist es günstig, wenn die Materialeinschlüsse elektrisch leitfähige Fasern aufweisen, wodurch bei Betätigung der aufnahmeseitigen Bedienmittel die Spannungsänderungen in exakt vorbestimmten Kontaktbereichen erzeugt werden können.

Ferner ist es günstig, wenn an dem wenigstens einen Bedienelement haptische Rückmeldungsmittel vorgesehen sind. Mittels der haptischen Rückmeldungsmittel kann eine Rückmeldung beispielsweise in Abhängigkeit der einer Beaufschlagungsdauer, eines Beaufschlagungsweges oder einer Beaufschlagungskraft erzeugt werden, was eine komfortablere Bedienung des in der Schutz-/Bedienungsaufnahme aufgenommenen Mobilfunkgerätes ermöglicht. Hierdurch ist beispielsweise eine besonders exakte druckabhängige Generierung von Steuerungssignalen möglich. In einer vorteilhaften Ausführungsform ist mittels der Rückmeldungsmittel eine haptische Rückmeldung generierbar, die in Abhängigkeit eines Beaufschlagungswegs veränderbar ist. Dabei wird je nach Beaufschlagungsweg beispielsweise je nach Position eines Reglers oder Joysticks eine größere oder kleinere haptische Rückmeldung generiert, wodurch eine besonders exakte wegabhängige Generierung von Steuerungssignalen möglich ist. In einer weiteren günstigen Ausführungsform ist mittels der Rückmeldungsmittel eine haptische Rückmeldung generierbar, die in Abhängigkeit einer Beaufschlagungsdauer veränderbar ist. Hierdurch erhält der Benutzer je nach Beaufschlagungsdauer eine größere oder kleinere haptische Rückmeldung, beispielsweise bei der Betätigung eines Druccknopfes oder Joysticks, wodurch eine besonders exakte zeitabhängige Generierung von Steuerungssignalen möglich ist.

In einer besonders vorteilhaften Ausführungsform ist der Eckenschutz durchgehend umlaufend gebildet, wodurch das Mobilfunkgerät auch zwischen den Ecken geschützt werden kann.

Vorteilhafterweise bildet die Umhüllung eine allseitig schließbare Geräteaufnahme, die ferner Abdichtungsmittel gegen den Eintritt von Flüssigkeiten, Gasen oder Feststoffen aufweist. Hierdurch kann das Mobilfunkgerät mittels der Umhüllung nach außen zuverlässig abgedichtet werden und wirksam gegen das Eindringen von Flüssigkeiten und Partikeln ins Innere der Umhüllung geschützt werden.

Zudem ist es günstig, wenn die Umhüllung wenigstens bereichsweise transparent ausgebildet ist. Dies hat den Vorteil, dass die mechanischen oder virtuelle geräteseitigen Bedienmittel oder andere Anzeigen des Mobilfunkgeräts gut sichtbar sind und in komfortabler Weise bedient werden können.

Vorteilhafterweise ist der Eckenschutz wenigstens bereichsweise elastisch ausgebildet, wodurch eine relativ hohe äußere Beaufschlagungsenergie, wie beispielsweise beim Herunterfallen des Mobilfunkgerätes seitens der Schutz-/Bedienungsaufnahme aufgenommen werden kann.

Vorteilhafterweise ist die Umhüllung aus einem Kunststoff oder Kunststoffgemisch gebildet und weist zumindest teilweise armierte Bereiche auf, wodurch die Schutz-/Bedienungsaufnahme auch mit einer aufwändigen Formgebung kostengünstig hergestellt und in den voraussichtlich am meisten beanspruchten Bereichen besonders stabil gegenüber äußeren mechanischen Beaufschlagungen ausgebildet werden.

Vorteilhafterweise weist die Umhüllung wenigstens an einem Rand einen verbreiterten Griffabschnitt auf, um ein sicheres Ergreifen der Schutz-/Bedienungsaufnahme beispielsweise auch mit Handschuhen zu ermöglichen. Der Griffabschnitt kann dabei einteilig mit der Umhüllung ausgebildet sein oder separat zu dieser hergestellt und nachträglich an dieser befestigt worden sein. Der Griffabschnitt kann hierbei sowohl dauerhaft als auch abnehmbar an der Umhüllung festgelegt sein.

Dabei ist es in jedem Fall günstig, wenn der verbreiterte Griffabschnitt eine Kontur aufweist, die ergonomisch an die Form einer Handinnenfläche angepasst ist, wodurch ein besonders komfortables Greifen der Umhüllung durch eine Hand möglich ist. Die Kontur des Griffabschnittes kann hierzu bereichsweise konvex und/oder bereichsweise konkav ausgebildet sein. Zudem weist die Umhüllung dabei vorteilhafterweise an zwei sich gegenüberliegenden Rändern jeweils einen der Griffabschnitte auf. Hierdurch kann der Benutzer seine Hände an jeweils einen Rand der Umhüllung anlegen, um die Fernbedienungsanordnung sicher zu halten, während er diese gleichzeitig durch Beaufschlagung mit seinen Daumen bedient. Alternativ oder zusätzlich hierzu ist es hierbei zudem auch möglich, die Fernbedienungsanordnung über eine Neigungssensorik des Mobilfunkgerätes zu steuern.

Vorteilhafterweise weist das Mobilfunkgerät eine Applikationssoftware auf, mittels der die geräteseitigen Bedienmittel an die aufnahmeseitigen Bedienmittel angepasst werden können. Dadurch wird eine besonders gute Abstimmung des Mobilfunkgeräts auf die Schutz-/Bedienungsaufnahme erreicht. Zudem kann eine Abstimmung des Mobilfunkgeräts auf unterschiedliche Geräte erfolgen, wobei beispielsweise unterschiedliche bzw. individuelle Einstellungen am Mobilfunkgeräte hinterlegt sind und ausgewählt werden können. Zudem ist es günstig, wenn an dem Mobilfunkgerät mittels der Applikationssoftware ein Rückmeldesignal in Form von Vibrationen, Tönen, Tonfolgen oder Lichteffekten generierbar ist, wenn das geräteseitige Bedienmittel betätigt ist. Hierdurch ist die Erzeugung von Rückmeldesignalen hinsichtlich einer vom Benutzer vorgenommenen Betätigung der Bedienmittel auch bei einem einfachen und kostengünstigen Aufbau der Schutz-/Bedienungsaufnahme möglich.

Ferner ist es günstig, wenn in der Schutz-/Bedienungsaufnahme zur Verstärkung von Steuerungssignalen eine separate Funkeinheit in Form eines Funksenders und/oder -empfängers aufgenommen ist. Dabei weist die separate Funkeinheit auch eine Schnittstelle für die Anbindung an das Mobilfunkgerät auf. Hierdurch kann auch mit einem in der Schutz-/Bedienungsaufnahme aufgenommenen handelsüblichen Mobilfunkgerät eine Übermittlung der Steuerungssignale über Funk erfolgen, was eine schnellere und stabilere Signalübertragung vom Mobilfunkgerät zu einer zu steuernden Vorrichtung erlaubt.

In einer besonders vorteilhaften Ausführungsform der Fernsteuerungsanordnung ist ferner ein separates Empfangs- und Umsetzungsmodul vorgesehen, das mit dem Mobilfunkgerät zum Empfang von geräteseitigen Steuerungssignalen in einem ersten Format koppelbar ist und mittels dem die Steuerungssignale in ein zweites Format umgesetzt und ausgesendet werden können. Die geräteseitigen Steuerungssignale im ersten Format können dabei beispielsweise durch Bluetooth-, Infrarot- oder WLAN-Signale gebildet sein. Diese werden von dem Empfangs- und Umsetzungsmodul in Steuerungssignale des zweiten Formats umgesetzt, die beispielsweise durch Funksignale gebildet sind. Das Empfangs- und Umsetzungsmodul kann dadurch beispielsweise relativ nahe beziehungsweise in Sichtweite des in der Schutz-/Bedienungsaufnahme aufgenommenen Mobilfunkgerätes positioniert werden, um einen sicheren Empfang der geräteseitigen Steuerungssignale im ersten Format zu gewährleisten. Anschließend erfolgt dann die Umsetzung und Aussendung der Steuerungssignale im zweiten Format, durch die eine Vorrichtung sicher gesteuert werden kann, auch wenn diese weitere entfernt oder hinter Hindernissen positioniert ist. Vorteilhafterweise ist das Empfangs- und Umsetzungsmodul dabei als mobiles Modul in einem tragbaren Gehäuse aufgenommen, wodurch diese in komfortabler Weise mitgeführt und in einer jeweils geeigneten Position platziert werden kann.

In den Figuren ist eine beispielhafte Ausführungsform der Erfindung dargestellt. Es zeigen:
- Figur 1: eine perspektivische Ansicht einer Fernsteuerungsanordnung mit einer Schutz-/Bedienungsaufnahme und einem darin aufnehmbaren Mobilfunkgerät,
- Figur 2: eine Ansicht der Vorderseite der Schutz-/Bedienungsaufnahme nach Fig. 1 mit aufgenommenem Mobilfunkgerät,
- Figur 3: eine geschnittene Ansicht der Schutz-/Bedienungsaufnahme in Ebene III-III aus Fig. 2
- Figur 4: eine geschnittene Ansicht der Schutz-/Bedienungsaufnahme mit aufnahmeseitigen Bedienmitteln in einer alternativen Ausführungsform,
- Figur 5: eine geschnittene Ansicht der Schutz-/Bedienungsaufnahme mit aufnahmeseitigen Bedienmitteln in einer weiteren alternativen Ausführungsform,
- Figur 6: eine geschnittene Ansicht der Schutz-/Bedienungsaufnahme mit aufnahmeseitigen Bedienmitteln in einer weiteren alternativen Ausführungsform,
- Figur 7: eine geschnittene Ansicht der Schutz-/Bedienungsaufnahme mit aufnahmeseitigen Bedienmitteln in einer weiteren alternativen Ausführungsform,
- Figur 8: eine Ansicht der Schutz-/Bedienungsaufnahme mit aufnahmeseitigen Bedienmitteln in einer weiteren alternativen Ausführungsform,
- Figur 9: eine geschnittene Ansicht der Schutz-/Bedienungsaufnahme mit einer separaten Handhabe,
- Figur 10: eine geschnittene Ansicht der Schutz-/Bedienungsaufnahme mit geräteseitigen Rückmeldungsmitteln,
- Figur 11: eine Ansicht der Schutz-/Bedienungsaufnahme mit einer Funkeinheit
- Figur 12: eine Ansicht der Schutz-/Bedienungsaufnahme mit zusätzlichen Griffabschnitten und
- Figur 13: eine Ansicht der Fernsteuerungsanordnung mit einem Empfangs- und Umsetzungsmodul.

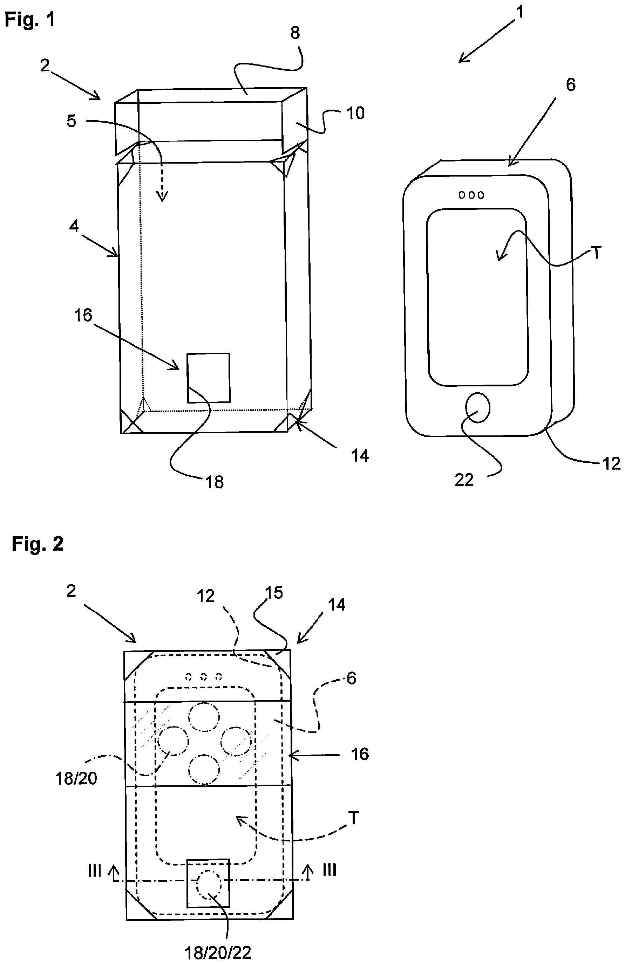

Fig. 1 zeigt eine Fernsteuerungsanordnung 1, insbesondere zur Steuerung von Hubvorrichtungen auf Baustellen und/oder Industrieanlagen mittels eines handelsüblichen Mobilfunkgerätes 6, wie beispielsweise einem Smartphone oder einem Tablet-Computer. Die Fernsteuerungsanordnung 1 weist hierzu eine Schutz-/Bedienungsaufnahme 2 auf, die eine Umhüllung 4 bildet, in der das Mobilfunkgerät 6 aufgenommen werden kann. Das Mobilfunkgerät 6 weist hierbei einen insbesondere kapazitiven Touchscreen T und beispielhaft wenigstens einen Knopf B auf.

Die Schutz-/Bedienungsaufnahme 2 ist derart ausgebildet, dass sie das hierin aufgenommene Mobilfunkgerät 6 wirksam gegen äußere Beaufschlagungen durch Feuchtigkeit, Gase oder Feststoffe beziehungsweise durch äußere Kräfte schützt und gleichzeitig dessen Verwendung als Fernsteuerung durch Betätigung von einer Außenseite der Umhüllung 4 ermöglicht. Hierdurch kann das Mobilfunkgerät, das beispielsweise lediglich für den üblichen Gebrauch als Mobiltelefon ausgelegt ist, beispielsweise auch auf Baustellen und in Industrieanlagen als Fernsteuerung eingesetzt werden, ohne dabei durch die in diesen Bereichen häufig auftretenden relativ hohen äußeren Beanspruchungen beschädigt zu werden.

Die Schutz-/Bedienungsaufnahme 2 weist dabei fünf Seiten auf, die eine Geräteaufnahme 5 begrenzen, die an die Abmessungen und die Form des Mobilfunkgeräts 6 angepasst ist. Ferner ist ein Deckel 8 vorgesehen, mittels dem die Geräteaufnahme 5 geschlossen und geöffnet werden kann.

Der Deckel 8 weist dabei beispielsweise drei Seitenteile 10 auf, die beim Schließen in die Geräteaufnahme 5 verlagert werden und dabei eine exakte und dichte Schließposition des Deckels 8 gegenüber der Umhüllung 4 bewirken. Dadurch ist die Schutz-/Bedienungsaufnahme 2 allseitig dicht verschließbar. Alternativ hierzu kann die Geräteaufnahme 5 beispielsweise auch durch Klettmittel, einen Knopfverschluss, einen Labyrinth-Verschluss oder alle sonstigen bekannten und geeigneten Abdichtungsmittel dicht verschlossen werden, um den Eintritt von Flüssigkeiten, Gasen oder Feststoffen in die Geräteaufnahme 5 zu verhindern.

Die Schutz-/Bedienungsaufnahme 2 kann dabei beispielsweise aus einem fluiddichten und elastischen Kunststoff oder einem Kunststoffgemisch gebildet sein, wie beispielsweise Polyethylen oder Polypropylen. Zudem kann die Schutz-/Bedienungsaufnahme 2 insbesondere im Bereich der Umhüllung 4 armierte Bereiche zur Stabilisierung und Erhöhung der Reißfestigkeit aufweisen, in denen beispielsweise zugfeste Fasern oder Aussteifungselemente in das übrige Material eingebracht sind.

In jedem Fall bildet die Schutz-/Bedienungsaufnahme 2 einen Eckenschutz 14 aus, in dem alle Ecken 12 des Mobilfunkgeräts 6 aufgenommen werden können, wie insbesondere in Fig. 2 dargestellt. Der Eckenschutz 14 ist dabei entweder, wie dargestellt, durch getrennte Schutzbereiche 15 an den einzelnen Ecken 12 oder alternativ hierzu geschlossen umlaufend ausgebildet (nicht dargestellt).

In jedem Fall ist der Eckenschutz 14 wenigstens bereichsweise durch ein elastisches Material gebildet, sodass beim Herunterfallen oder bei Druck- oder Stoßeinwirkung eine auf die Schutz-/Bedienungsaufnahme 2 einwirkende Beaufschlagungsenergie durch die Verformung des Eckenschutzes 14 wenigstens teilweise aufgenommen werden kann.

Die Schutz-/Bedienungsaufnahme 2 kann zudem insbesondere im Bereich der Umhüllung 4 wenigstens einen transparenten Bereich 16 aufweisen (vgl. Fig. 2). Der transparente Bereich 16 ist dabei beispielsweise über geräteseitigen Bedienmitteln 18 des Mobilfunkgeräts 6 angeordnet, die wenigstens ein am Touchscreen T erzeugtes virtuelles Bedienfeld 20 und/oder ein mechanisches Bedienelement 22, wie beispielsweise in Form einer Taste oder eines Knopfes umfassen. Diese geräteseitigen Bedienmittel 18, die über die Schutz-/Bedienungsaufnahme 2 betätigt werden, können dadurch von dem Benutzer gut eingesehen werden.

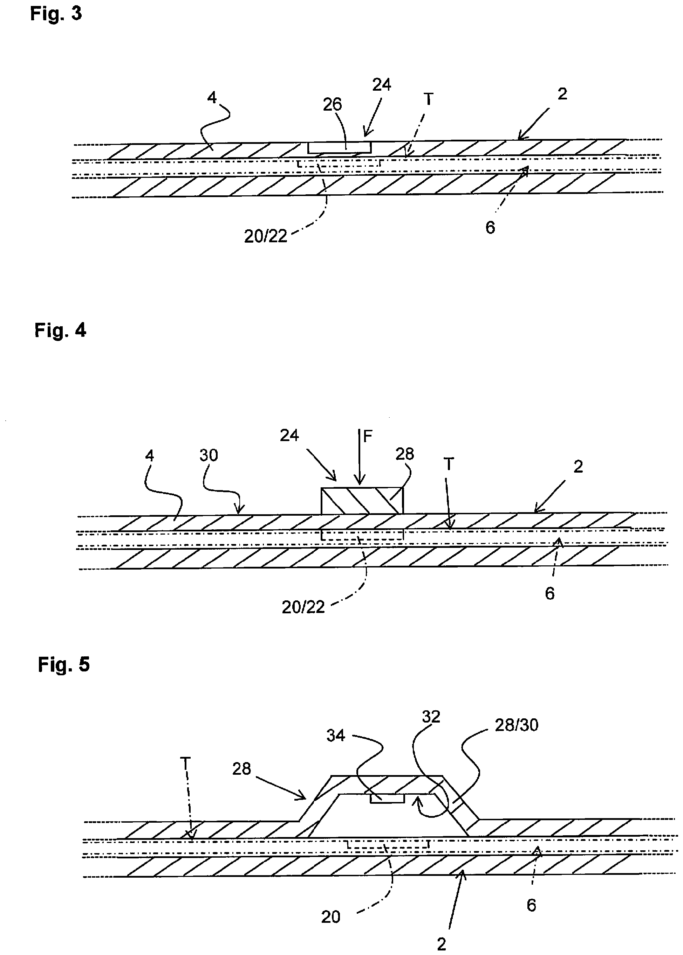

Zur sicheren und exakten Betätigung der geräteseitigen Bedienmittel 18 sind an der Schutz-/Bedienungsaufnahme 2 aufnahmeseitige Bedienmittel 24 vorgesehen. In der Ausführungsform der Schutz-/Bedienungsaufnahme 2 nach Fig. 3 umfassen diese beispielsweise eine teilweise Materialausnehmung 26, die in die Umhüllung 4 in Form einer Vertiefung eingelassen ist. Diese Materialausnehmung 26 ist dabei oberhalb des geräteseitigen virtuellen Bedienfeldes 20 beziehungsweise des mechanischen Bedienelements 22 angeordnet und kann mit dem Finger des jeweiligen Benutzers ertastet und beaufschlagt werden.

Dabei ist die Materialausnehmung 26 derart ausgebildet, dass noch eine ausreichende geschlossene Materialschicht der Umhüllung 4 verbleibt, um das aufgenommene Mobilfunkgerät 6 vor Verschmutzung oder Beschädigungen zu schützen. Gleichzeitig ist die Dicke der verbleibenden Materialschicht so gewählt, dass durch eine Beaufschlagung der Materialausnehmung 26 mit einem Finger des Benutzers eine vom Touchscreen T detektierbare kapazitive Änderung generiert werden kann, durch die ein Steuerungssignal erzeugt wird.

In der Ausführungsform der Schutz-/Bedienungsaufnahme 2 nach Fig. 4 sind die aufnahmeseitigen Bedienmittel 24 durch ein Bedienelement 28 gebildet, das sich von einer Außenseite 30 der Umhüllung 4 weg erstreckt. Das aufnahmeseitige Bedienelement 28 ist dabei auch hier oberhalb des geräteseitigen virtuellen Bedienfeldes 20 beziehungsweise des mechanischen Bedienelements 22 angeordnet.

Das aufnahmeseitige Bedienelement 28 kann somit durch einen Druck F derart beaufschlagt werden, dass es das geräteseitige virtuelle Bedienfeld 20 beziehungsweise das mechanische Bedienelement 22 des Mobilfunkgeräts 6 betätigt und ein Steuersignal des Mobilfunkgeräts 6 generiert wird. Gleichzeitig kommt es zu einer Verformung des aufnahmeseitigen Bedienelementes 28, die vom Benutzer als haptische Rückmeldung wahrgenommen wird. Hierbei ist es von Vorteil, wenn das aufnahmeseitige Bedienelement 28 elektrisch leitfähig ausgebildet ist, um an dem beispielsweise kapazitiven Touchscreen T eine zuverlässig detektierbare Spannungsänderung erzeugen zu können.

Wie in Fig. 5 dargestellt, kann das aufnahmeseitige Bedienelement 28 auch durch einen im Wesentlichen blasenförmigen kollabierbaren Knopf 30 gebildet sein. Dieser kann durch Druckbeaufschlagung in eine Kontaktstellung verbracht werden, in der er mit einer Innenseite 32 an dem virtuellen Bedienfeld 20 des Touchscreens T anliegt, um an diesem eine detektierbare kapazitive Änderung zu erzeugen. Um hierbei eine ausreichende Spannungsänderung in Folge des druckausübenden Fingers über den Knopf 30 am Touchscreen T sicherzustellen, kann an der Innenseite 32 des Knopfes 30 ein elektrisch leitfähiger Kontaktkörper 34, wie beispielsweise ein Metallknopf vorgesehen sein, der in der Kontaktstellung eine sichere Spannungsübertragung gewährleistet.

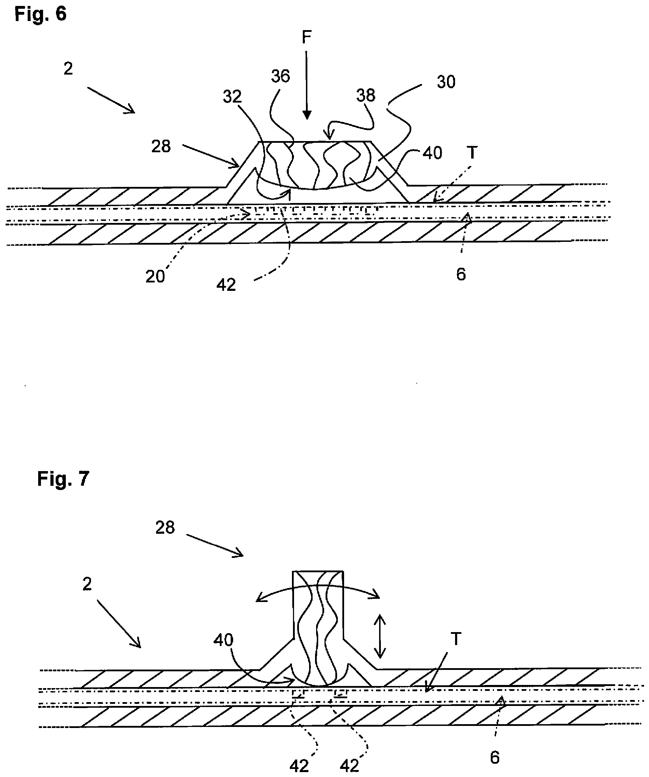

In Fig. 6 ist eine weitere alternative Ausführungsform des kollabierbaren Knopfes 30 dargestellt, der elektrisch leitfähige Materialeinschlüsse 36 in Form von elektrisch leitfähigen Fasern aufweist, die sich von einer Außenseite 38 des aufnahmeseitigen Bedienelementes 24 zur Innenseite 32 erstrecken. Diese ist durch eine elastische Beaufschlagungskontur 40 gebildet, die eine ballige Form aufweist.

Die Beaufschlagungskontur 40 ist dabei oberhalb des virtuellen Bedienfeldes 20 angeordnet, das in diesem Fall mehrere Detektionsfelder 42 aufweist. Durch Beaufschlagung des Knopfes 30 mit der Druckkraft F kann dieser in die Kontaktstellung verbracht werden, in der die Innenseite 32 an den Touchscreen T angelegt wird. Die Zahl der Detektionsfelder 42, die hierbei kontaktiert werden, ist abhängig von der Größe der aufgebrachten Druckkraft F und der daraus resultierenden elastischen Verformung der Beaufschlagungskontur 40.

Fig. 7 zeigt eine weitere alternative Ausführungsform des aufnahmeseitigen Bedienelementes 28 als Steuerhebel oder Joystick. Das aufnahmeseitige Bedienelement 28 kann dabei beispielsweise in zwei oder mehrere Richtungen verschwenkt sowie senkrecht beaufschlagt werden. In Abhängigkeit der jeweiligen Beaufschlagungsrichtung wird hier die ballige Beaufschlagungskontur 40 an bestimmte Detektionsfelder 42 des Touchscreens T angelegt, wodurch wiederum bestimmte Steuerungssignale erzeugt werden.

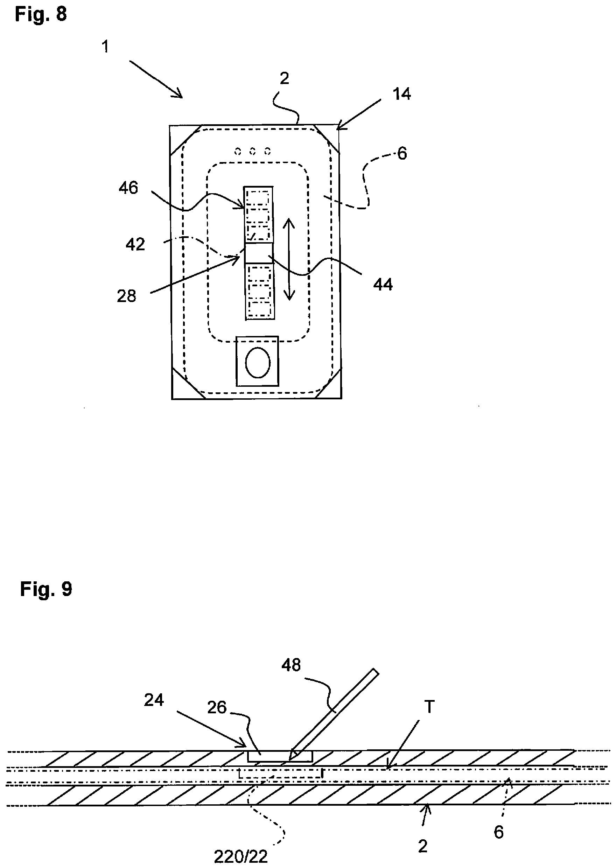

Das aufnahmeseitige Bedienelement 28 kann zudem auch als Regler 44 ausgebildet sein, wie in der Ausführungsform nach Fig. 8 dargestellt. Der Regler 44 ist dabei in die Schutz-/Bedienungsaufnahme 2 integriert und entlang einer Führung 46 verschiebbar. In Abhängigkeit der Position des Reglers 44 entlang der Führung 46 werden dabei unterschiedliche Detektionsfelder 42 kontaktiert, über die wiederum jeweils unterschiedliche Steuerungssignale erzeugt werden. Ferner kann das aufnahmeseitige Bedienelement 28 alternativ hierzu als Drehknopf ausgebildet werden (nicht dargestellt).

Darüber hinaus ist es auch möglich, dass die Schutz-/Bedienungsaufnahme 2 mit eingebrachtem Mobilfunkgerät 6 beispielsweise gemäß Fig. 3 durch eine separaten Handhabe 48 bedient wird, wie in Fig. 9 dargestellt. Die separate Handhabe 48 ist dabei beispielhaft durch einen Stylus, beziehungsweise durch einen Stift mit einer Spitze gebildet. Mittels dieser kann eine zu beaufschlagende Stelle des Touchscreens T innerhalb der Materialausnehmung 26 exakt beaufschlagt werden. Alternativ zu der Darstellung gemäß Fig. 9 ist es auch möglich, die separate Handhabe 46 und die Materialausnehmung 26 derart auszubilden, dass diese aneinander befestigt bzw. angedockt werden können.

Beim Beaufschlagen der geräteseitigen Bedienmittel 18 über die aufnahmeseitigen Bedienmittel 24 beziehungsweise die separate Handhabe 46, kann dabei in allen Ausführungsformen die Erzeugung von insbesondere haptischen Rückmeldungen vorgesehen sein.

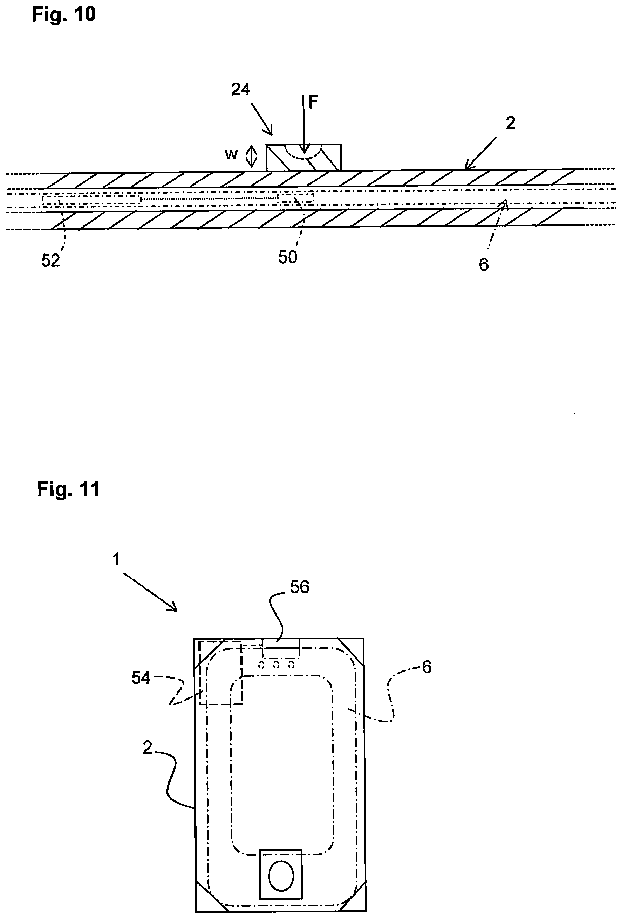

Alternativ zu den oben beschriebenen rein mechanischen haptischen Rückmeldungen kann hierbei auch eine vom Mobilfunkgerät 6 generierte geräteseitige Rückmeldung vorgesehen werden. Dabei kann die Beaufschlagung der aufnahmeseitigen Bedienmittel 24 von einer geräteseitigen Sensorik 50 des Mobilfunkgeräts 6 in Abhängigkeit einer Beaufschlagungsintensität detektiert und ausgewertet werden, wie in Fig. 10 dargestellt. Je nach Beaufschlagungsintensität kann dabei eine geräteseitige Elektronik 52 eine vorbestimmte Rückmeldung des Mobilfunkgeräts 6 generieren. Die Rückmeldung kann dabei beispielsweise in Abhängigkeit eines Beaufschlagungswegs w, der Beaufschlagungsdruckkraft F oder einer Beaufschlagungszeit erzeugt werden. Als haptisch wahrnehmbare Rückmeldungen des Mobilfunkgeräts 6 können hierbei beispielsweise Vibrationen erzeugt werden. Alternativ hierzu können auch akustische oder optische Signale beispielsweise in Form von Tönen, Tonfolgen oder Lichteffekten als weg- oder druckabhängige Rückmeldung generiert werden.

Fig. 11 zeigt eine weitere Ausführungsform der Fernsteuerungsanordnung 1, bei der die Schutz-/Bedienungsaufnahme 2 zusätzlich eine integrierte separate Sendeeinheit 54 aufweist, wie beispielsweise in Form eines Transceivers mit Funksender und -empfänger. Die Sendeeinheit 54 kann dabei an einem beliebigen Bereich der Schutz-/Bedienungsaufnahme 2 vorgesehen werden und dient dazu, beispielsweise eine schnellere und stabilere Signalübertragung der Steuerungssignale in einem anderen Format als im Mobilfunkgerät 6 vorgesehen zu ermöglichen. In der Schutz-/Bedienungsaufnahme 2 ist hierzu eine Schnittstelle 56 zur Verbindung der Funkeinheit 54 mit dem Mobilfunkgerät 6 vorgesehen. Diese kann beispielsweise über einen Standardanschluss, wie insbesondere einen USB-Anschluss, oder alternativ auch kabellos, wie beispielsweise über eine Bluetooth-Verbindung erfolgen.

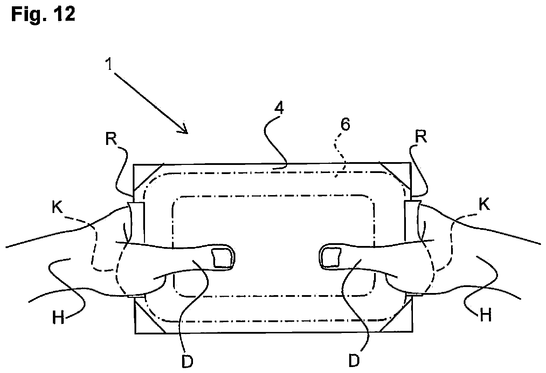

Fig. 12 zeigt eine weitere Ausführungsform der Fernsteuerungsanordnung 1, bei der die Schutz-/Bedienungsaufnahme 2 an zwei einander gegenüberliegenden Rändern R der Umhüllung 4 jeweils einen Griffabschnitt 58 aufweist. Die Griffabschnitte 58 weisen dabei gegenüber der Umhüllung 4 eine größere Breite auf und bilden eine Kontur K aus, die zur Erzielung einer ergonomisch günstigen Form bereichsweise konvex ausgebildet ist. Hierdurch kann der Benutzer seine Hände H in komfortabler Weise an die Ränder R der Schutz-/Bedienungsaufnahme 2 anlegen, um die Fernsteuerungsanordnung 1 mit seinen Daumen D zu bedienen. Alternativ hierzu können die Griffabschnitte 58 auch lediglich dazu verwendet werden, um die Fernsteuerungsanordnung 1 sicher zu halten und beispielsweise über eine Neigungssensorik des Mobilfunkgerätes 6 zu steuern.

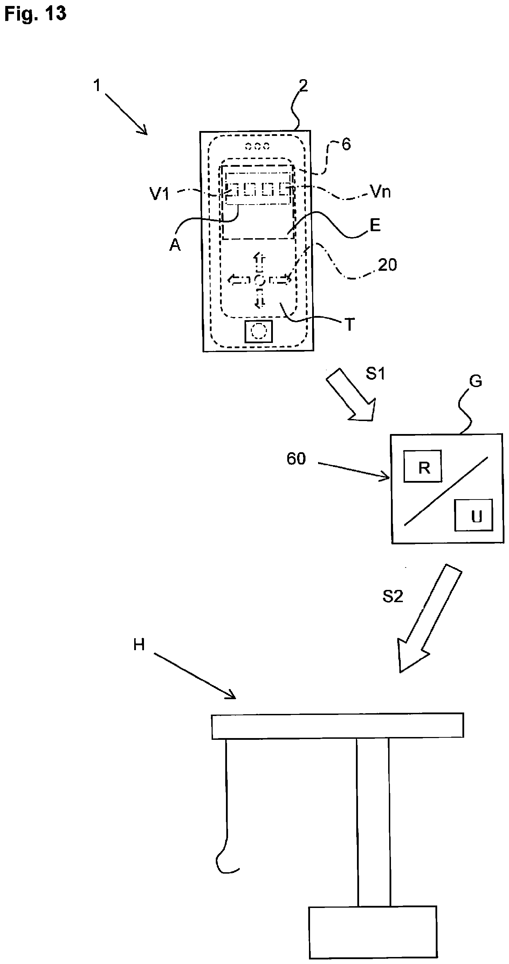

Fig. 13 zeigt die Fernsteuerungsanordnung 1 mit einer beispielshaften Ausführungsform der Schutz-/Bedienungsaufnahme 2 beziehungsweise des eingebrachte Mobilfunkgerätes 6. Wie durch strichpunktierte Linien angedeutet, ist in einer Elektronik E des Mobilfunkgerätes 6 eine Applikationssoftware A gespeichert, die die Verwendung der Fernsteuerungsanordnung 1 insbesondere zur Steuerung von Hubvorrichtungen H erlaubt. In der Applikationssoftware A sind dabei mehrere unterschiedliche Voreinstellungen V1 bis Vn vorgesehen, die einzeln ausgewählt werden können, um eine genaue Anpassung des Mobilfunkgeräts 6 beziehungsweise deren geräteseitiger Bedienmittel 18 an die jeweilige Hubvorrichtung vorzunehmen. Insbesondere können hierbei beispielsweise die auf dem Touchscreen angezeigten virtuellen Bedienfelder 20 in einer für die jeweilige Hubvorrichtung H besonders geeigneten Form generiert werden.

Darüber hinaus kann die Fernsteuerungsanordnung 1 wie dargestellt ein zusätzliches Empfangs- und Umsetzungsmodul 60 aufweisen. Dieses weist eine Empfangseinrichtung R auf, mittels dem geräteseitige Steuerungssignale S1 empfangen werden, die vom Mobilfunkgerät 6 in einem ersten Format ausgesendet werden. Mittels einer Umsetzungseinrichtung U können diese geräteseitigen Steuerungssignale S1 in ein zweites Format umgesetzt und als modulseitige Steuerungssignale S2 ausgesendet werden, um die Hubvorrichtung H zu steuern. Das zweite Format ist dabei üblicherweise so gewählt, dass es eine größere Reichweite oder eine direktere und schnellere Steuerung der Hubvorrichtung H ermöglicht.

Um das Empfangs- und Umsetzungsmodul 60 hierbei in komfortabler Weise transportieren und an einem möglichst geeigneten Ort geschützt abstellen zu können, sind die Empfangseinrichtung R und die Umsetzungseinrichtung U in einem gemeinsamen Gehäuse G untergebracht und bilden somit ein einheitliches mobiles Modul.

## Patentansprüche

1. Fernsteuerungsanordnung mit einer Schutz-/Bedienungsaufnahme (2) und einem Mobilfunkgerät (6) zur Verwendung als Fernsteuerung,
wobei die Schutz-/Bedienungsaufnahme (2) eine geschlossen umlaufende Umhüllung (4), an der ein Eckenschutz (14) für die Aufnahme von Geräteecken (12) des Mobilfunkgeräts (6) vorgesehen ist, und
aufnahmeseitige Bedienmittel (24) für die Ansteuerung geräteseitiger Bedienmittel (18) des Mobilfunkgeräts (6) aufweist, wobei die aufnahmeseitigen Bedienmittel (24) von einer Außenseite beaufschlagbar sind,
und in dem Eckenschutz (14) alle Geräteecken (12) des Mobilfunkgeräts (6) aufnehmbar sind und aufnahmeseitige Bedienmittel (24) an der Außenseite der Umhüllung (4) haptisch wahrnehmbar sind, die zur Ansteuerung virtueller geräteseitiger Bedienmittel (18) dienen, die wenigstens ein an einem Touchscreen (T) des Mobilfunkgerätes (6) erzeugtes virtuelles Bedienfeld (20) umfassen
**dadurch gekennzeichnet, dass** das Mobilfunkgerät (6) eine Sensorik (50) zur Detektion einer Beaufschlagungsintensität der Bedienmittel (24) und eine geräteseitige Elektronik (52) aufweist, die in Abhängigkeit der detektierten Beaufschlagungsintensität eine vorbestimmte, haptisch wahrnehmbare Rückmeldung generiert.

2. Fernsteuerungsanordnung nach Anspruch 1, **dadurch gekennzeichnet, dass** die aufnahmeseitigen Bedienmittel (24) wenigstens eine in die Umhüllung (4) eingelassene Materialausnehmung (26) aufweisen.

3. Fernsteuerungsanordnung nach Anspruch 1 oder 2, **dadurch gekennzeichnet, dass** die aufnahmeseitigen Bedienmittel (24) wenigstens ein sich von einer Außenseite (38) der Umhüllung (4) weg erstreckendes Bedienelement (28) aufweisen.

4. Fernsteuerungsanordnung nach Anspruch 3, **dadurch gekennzeichnet, dass** das wenigstens eine Bedienelement (28) einen Steuerhebel oder Joystick, einen Regler (44), einen Drehschalter oder einen kollabierbaren Knopf (30) bildet.

5. Fernsteuerungsanordnung nach einem der Ansprüche 1 bis 4, **dadurch gekennzeichnet, dass** die aufnahmeseitigen Bedienmittel (24) eine separate, insbesondere stiftförmige Handhabe (48) zur Beaufschlagung der Materialausnehmung (26) oder des Bedienelementes (28) aufweisen.

6. Fernsteuerungsanordnung nach einem der Ansprüche 1 bis 5, **dadurch gekennzeichnet, dass** die aufnahmeseitigen Bedienmittel (24) eine elastische, insbesondere ballige Beaufschlagungskontur (40) aufweisen.

7. Fernsteuerungsanordnung nach einem der Ansprüche 1 bis 6, **dadurch gekennzeichnet, dass** die aufnahmeseitigen Bedienmittel (24) wenigstens teilweise elektrisch leitfähig ausgebildet sind.

8. Fernsteuerungsanordnung nach einem der Ansprüche 1 bis 7, **dadurch gekennzeichnet, dass** die aufnahmeseitigen Bedienmittel (24) haptische Rückmeldungsmittel aufweisen.

9. Fernsteuerungsanordnung nach einem der Ansprüche 1 bis 8, **dadurch gekennzeichnet, dass** der Eckenschutz (14) geschlossen umlaufend ausgebildet ist.

10. Fernsteuerungsanordnung nach einem der Ansprüche 1 bis 9, **dadurch gekennzeichnet, dass** die Umhüllung (4) eine allseitig schließbare Geräteaufnahme (5) bildet und Abdichtungsmittel gegen den Eintritt von Flüssigkeiten, Gasen oder Feststoffen vorgesehen sind.

11. Fernsteuerungsanordnung nach einem der Ansprüche 1 bis 10, **dadurch gekennzeichnet, dass** die Umhüllung (4) wenigstens bereichsweise transparent ausgebildet ist.

12. Fernsteuerungsanordnung nach einem der Ansprüche 1 bis 11, **dadurch gekennzeichnet, dass** der Eckenschutz (14) wenigstens bereichsweise elastisch ausgebildet ist, um stoßdämpfend zu wirken.

13. Fernsteuerungsanordnung nach einem der Ansprüche 1 bis 12, **dadurch gekennzeichnet, dass** die Umhüllung (4) aus einem Kunststoff oder Kunststoffgemisch hergestellt ist und zumindest teilweise armierte Bereiche aufweist.

14. Fernsteuerungsanordnung nach einem der Ansprüche 1 bis 13, **dadurch gekennzeichnet, dass** die Umhüllung (4) wenigstens an einem Rand (R) einen verbreiterten Griffabschnitt (58) aufweist, die an die Form einer Handinnenfläche angepasst ist.

15. Fernsteuerungsanordnung nach einem der Ansprüche 1 bis 14, **dadurch gekennzeichnet, dass** das Mobilfunkgerät (6) eine Applikationssoftware (A) aufweist, mittels der die geräteseitigen Bedienungsmittel (18) an die aufnahmeseitigen Bedienmittel (24) anpassbar sind.

## Claims

1. A remote control arrangement having a protective/ control receptacle (2) and a mobile radio device (6) for use as remote control,
wherein the protective/control receptacle (2) has a closed circumferential cover (4), at which a corner protection (14) is provided for holding corners (12) of the mobile radio device (6), and
control means (24) on the receptacle for the control of control means (18) on the device of the mobile radio device (6), wherein the control means (24) on the receptacle can be subject to impact by an outer face,
and in the corner protection (14) all corners (12) of the mobile radio device (6) can be held and control means (24) on the receptacle are haptically perceivable on the outer face of the cover (4), said control means on the receptacle being used to the control of virtual control means (18) on the device, which comprises at least one virtual control panel (20) generated on a touchscreen (T) of the mobile radio device (6)
**characterized in that** the mobile radio device (6) has a sensor system (50) for detecting an impact intensity of the control means (24) and an electronic system (52) on the device, which generates a predetermined, haptically perceivable feedback as a function of the detected impact intensity.

2. The remote control arrangement according to claim 1, **characterized in that** the control means (24) on the receptacle have at least one material recess (26) embedded in the cover (4) .

3. The remote control arrangement according to claim 1 or 2, **characterized in that** the receptacle means (24) on the holder has at least one control element (28) extending away from an outer face (38) of the cover (4).

4. The remote control arrangement according to claim 3, **characterized in that** the at least one control element (28) is a control lever or joystick, a controller (44), a rotary switch or a collapsible button (30).

5. The remote control arrangement according to any of claims 1 to 4, **characterized in that** the control means (24) on the receptacle has a separate, in particular pen-shaped handle (48) for impacting the material recess (26) or the control element (28).

6. The remote control arrangement according to any of claims 1 to 5, **characterized in that** the control means (24) on the receptacle has an elastic, in particular spherical impact contour (40).

7. The remote control arrangement according to any of claims 1 to 6, **characterized in that** the control means (24) on the receptacle is at least partially electrically conductive.

8. The remote control arrangement according to any of claims 1 to 7, **characterized in that** the control means (24) on the receptacle has haptic feedback means.

9. The remote control arrangement according to any of claims 1 to 8, **characterized in that** the corner protection (14) has a continuous circumferential form.

10. The remote control arrangement according to any of claims 1 to 9, **characterized in that** the cover (4) forms a device holder (5) that can be sealed on all sides and that sealing means is provided to prevent the ingress of liquids, gases or solids.

11. The remote control arrangement according to any of claims 1 to 10, **characterized in that** the cover (4) is transparent at least in regions.

12. The remote control arrangement according to any of claims 1 to 11, **characterized in that** the corner protection (14) is elastic at least in regions, in order to have a shock-absorbing effect.

13. The remote control arrangement according to any of claims 1 to 12, **characterized in that** the cover (4) is made of a plastic or plastic mixture and has at least partially reinforced regions.

14. The remote control arrangement according to any of claims 1 to 13, **characterized in that** the cover (4) has a widened grip section (58) at least on one edge (R), which is adapted to the shape of a palm of the hand.

15. The remote control arrangement according to any of claims 1 to 14, **characterized in that** the mobile radio device (6) has application software (A), by means of which the control means (18) on the device can be adapted to the control means (24) on the holder.

## Revendications

1. Agencement de télécommande avec un logement de protection/commande (2) et un appareil radio mobile (6) pour une utilisation en tant que télécommande,
dans lequel le logement de protection/commande (2) présente une enveloppe (4) périphérique fermée au niveau de laquelle est prévue une protection d'angle (14) pour le logement d'angles d'appareil (12) de l'appareil radio mobile (6), et
des moyens de commande du côté du logement (24) pour le pilotage de moyens de commande du côté de l'appareil (18) de l'appareil radio mobile (6), dans lequel les moyens de commande du côté du logement (24) peuvent être sollicités depuis un côté extérieur,
et tous les angles d'appareil (12) de l'appareil radio mobile (6) peuvent être logés dans la protection d'angle (14), et sur le côté extérieur de l'enveloppe (4) peuvent être haptiquement perceptibles les moyens de commande du côté du logement (24) servant au pilotage de moyens de commande virtuels du côté de l'appareil (18) et qui comprennent au moins un panneau de commande (20) virtuel produit sur un écran tactile (T) de l'appareil radio mobile (6)
**caractérisé en ce que** l'appareil radio mobile (6) présente une technologie de capteurs (50) pour la détection d'une intensité de sollicitation des moyens de commande (24) et une électronique (52) du côté de l'appareil qui, en fonction de l'intensité de sollicitation détectée, génère une rétroaction haptiquement perceptible prédéterminée.

2. Agencement de télécommande selon la revendication 1, **caractérisé en ce que** les moyens de commande du côté du logement (24) présentent au moins un évidement matériel (26) enchâssé dans l'enveloppe (4).

3. Agencement de télécommande selon la revendication 1 ou 2, **caractérisé en ce que** les moyens de commande du côté du logement (24) présentent au moins un élément de commande (28) qui s'étend en s'éloignant depuis un côté extérieur (38) de l'enveloppe (4).

4. Agencement de télécommande selon la revendication 3, **caractérisé en ce que** le au moins un élément de commande (28) forme un levier de pilotage ou une manette, un régulateur (44), un commutateur rotatif ou un bouton (30) repliable.

5. Agencement de télécommande selon l'une des revendications 1 à 4, **caractérisé en ce que** les moyens de commande du côté du logement (24) présentent une poignée (48) séparée, en particulier en forme de tige, pour solliciter l'évidement matériel (26) ou l'élément de commande (28).

6. Agencement de télécommande selon l'une des revendications 1 à 5, **caractérisé en ce que** les moyens de commande du côté du logement (24) présentent un contour de sollicitation (40) élastique, en particulier bombé.

7. Agencement de télécommande selon l'une des revendications 1 à 6, **caractérisé en ce que** les moyens de commande du côté du logement (24) sont conçus au moins partiellement électriquement conducteurs.

8. Agencement de télécommande selon l'une des revendications 1 à 7, **caractérisé en ce que** les moyens de commande du côté du logement (24) présentent des moyens de rétroaction haptiques.

9. Agencement de télécommande selon l'une des revendications 1 à 8, **caractérisé en ce que** la protection d'angle (14) est conçue de façon périphérique et fermée.

10. Agencement de télécommande selon l'une des revendications 1 à 9, **caractérisé en ce que** l'enveloppe (4) forme un logement d'appareil (5) qui peut être fermé sur tous les côtés et que des moyens d'étanchéité sont prévus contre l'entrée de liquides, de gaz ou de matières solides.

11. Agencement de télécommande selon l'une des revendications 1 à 10, **caractérisé en ce que** l'enveloppe (4) est conçue de façon transparente au moins par endroits.

12. Agencement de télécommande selon l'une des revendications 1 à 11, **caractérisé en ce que** la protection d'angle (14) est conçue de façon élastique au moins par endroits pour agir de façon à absorber les chocs.

13. Agencement de télécommande selon l'une des revendications 1 à 12, **caractérisé en ce que** l'enveloppe (4) est fabriquée dans un plastique ou un mélange de plastiques et présente au moins partiellement des régions armées.

14. Agencement de télécommande selon l'une des revendications 1 à 13, **caractérisé en ce que** l'enveloppe (4) présente, au moins sur un bord (R), une section de préhension (58) élargie qui est ajustée à la forme d'une surface intérieure de main.

15. Agencement de télécommande selon l'une des revendications 1 à 14, **caractérisé en ce que** l'appareil radio mobile (6) présente un logiciel d'application (A) au moyen duquel les moyens de commande du côté de l'appareil (18) peuvent être ajustés aux moyens de commande du côté du logement (24).
